**Europäisches Patentamt**

**European Patent Office**

**Office européen des brevets**

(11) Numéro de publication : **0 371 836 B1**

## (12) FASCICULE DE BREVET EUROPEEN

(45) Date de publication du fascicule du brevet :
**25.03.92 Bulletin 92/13**

(51) Int. Cl.⁵ : **G01P 3/44,** B60B 27/00

(21) Numéro de dépôt : **89403001.4**

(22) Date de dépôt : **31.10.89**

(54) **Roulement à capteur d'informations.**

(30) Priorité : **29.11.88 FR 8815558**

(43) Date de publication de la demande :
**06.06.90 Bulletin 90/23**

(45) Mention de la délivrance du brevet :
**25.03.92 Bulletin 92/13**

(84) Etats contractants désignés :
**DE ES GB IT SE**

(56) Documents cités :
**FR-A- 2 558 223**
**FR-A- 2 574 501**
**FR-A- 2 599 794**

(73) Titulaire : **S.N.R. ROULEMENTS**
**Boîte Postale 17 1, rue des Usines**
**F-74010 Annecy Cédex (FR)**

(72) Inventeur : **Hajzler, Christian**
**13, rue de Rumilly**
**F-74000 Annecy (FR)**

(74) Mandataire : **Ernst-Schonberg, Michel**
**R.N.U.R. S. 0804 B.P. 103 8 & 10, avenue**
**Emile-Zola**
**F-92109 Boulogne Billancourt (FR)**

## Description

L'invention concerne un roulement à capteur d'informations du type comportant une bague fixe portant un moyen capteur de champ magnétique et une bague tournante portant un moyen codeur des chemins de roulement de réception de corps roulants au contact des dites bagues et une garniture d'étanchéité interposée entre ces mêmes bagues.

La publication FR-A- 2574501 décrit un roulement à capteur d'informations dans lequel la garniture possède une lèvre d'étanchéité en contact avec le support du moyen codeur de manière à enfermer la garniture d'étanchéité entre les armatures support des moyens capteur et codeur.

La position relative des moyens capteur et codeur dépend, en général, des tolérances d'usinage des bagues et des pièces avoisinantes et ne peut être obtenue sans un ajustage additionnel au cours du montage final des moyens capteur et codeur. D'autre part, l'entrefer souvent magnétique, est exposé après montage à la pollution par des éléments agressifs extérieurs.

L'invention a pour objet un roulement dans lequel l'agencement des moyens capteur et codeur et de la garniture d'étanchéité évite toute pollution ou déréglage desdits moyens et peut être réalisé très simplement sur un roulement de dimensions prédéfinies.

L'objet de l'invention est satisfait par des roulements à capteur d'informations comme défini dans les revendications 1 et 2.

Selon un autre aspect de l'invention, les moyens capteur et codeur, respectivement fixés sur les bagues du roulement sont axialement décalés vers l'intérieur du roulement par rapport à la garniture d'étanchéité et constituent conjointement une unité prémontée susceptible d'être montée directement sur le roulement et positionnée par rapport aux faces et aux portées perpendiculaires du roulement.

Selon une autre variante de l'invention, les moyens capteur et codeur sont radialement décalés par rapport à la garniture d'étanchéité dans le but de limiter l'encombrement axial du roulement.

D'autres caractéristiques et avantages de l'invention apparaîtront à la lecture d'exemples de réalisation du roulement en référence au dessin annexé dans lequel :

– La figure 1 est une vue en coupe axiale d'un moyeu de roue incorporant un roulement à capteur d'informations,

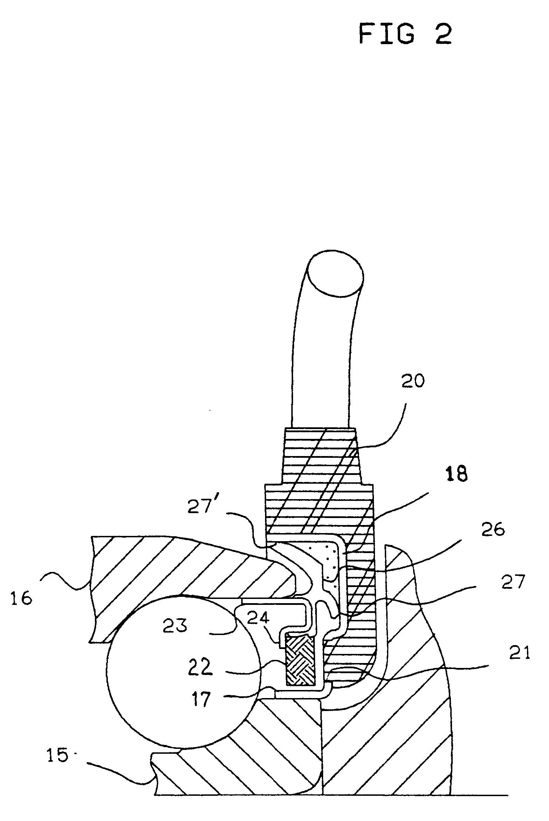

– La figure 2 est une vue en coupe du détail 11 de la figure 1 montrant l'implantation des moyens capteur et codeur et de la garniture d'étanchéité,

– La figure 3 est une vue en coupe aggrandie du détail d'implantation des moyens capteur et codeur et de la garniture d'étanchéité sur un roulement selon une variante de réalisation de l'invention.

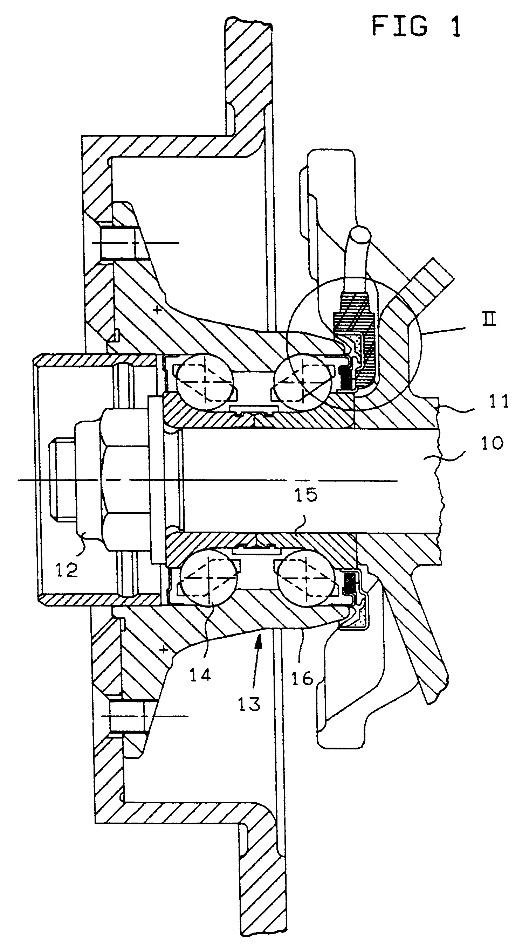

Un moyeu de roue non motrice tel que représenté à la figure 1 comporte une fusée 10 débouchant à l'extérieur d'un porte-fusée 11 et portant a son extrémité filetée, l'écrou 12 et la rondelle de mise en contrainte axiale d'un roulement 13 à deux rangées de corps roulants 14 disposés entre une bague intérieure 15 fractionnée en deux parties et une bague extérieure 16 munie d'une extension radiale constitutive de la bride de fixation d'un disque de frein et de la roue du véhicule.

Il y a lieu de noter que le roulement pourrait être constitué par deux roulements conventionnels sans sortir, pour autant, du cadre de la présente invention.

La bague intérieure 15, fixe dans le montage représenté, possède une portée extérieure qui reçoit une monture 17 d'un support 18 du moyen capteur 20. Le moyen capteur 20 est rendu solidaire de la monture 17 qui comporte une ouverture axiale 21 disposée dans le champ magnétique du moyen codeur 22.

La bague tournante extérieure 16 possède un alésage intérieur qui reçoit une monture 23 d'un support 24 du moyen codeur 22. La monture 23 porte également la garniture 26 d'étanchéité dont les lèvres axiale et radiale 27, 27′ sont en appui sur la paroi du support 18. Le moyen codeur 22 peut être avantageusement réalisé dans la matière constitutive de la garniture d'étanchéité et surmoulé avec ladite garniture sur la monture 23. Toutefois, la garniture sera dans ce cas localement chargée de matière magnétisable au niveau du moyen codeur.

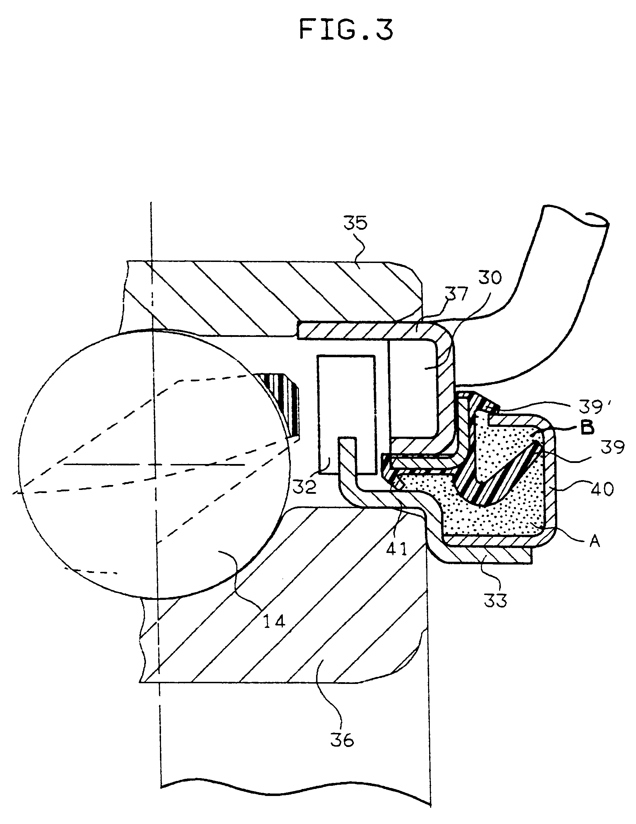

Le roulement représenté à la figure 3 possède une bague extérieure fixe 35 sur laquelle est monté le moyen capteur 30 et une bague intérieure tournante 36 sur laquelle est fixé le moyen codeur 32.

Le moyen codeur 32 est fixé à une monture 33 par tout moyen connu tel que le collage, surmoulage, soudage...

La bague intérieure 36 possède une portée d'alésage et une face latérale pour le montage et l'appui axial de la monture 33 de support du codeur 32.

Le moyen capteur 30 est monté sur la bague 35 par l'intermédiaire d'un support ou monture 37 montée en butée contre la bague 35.

La distance axiale entre le capteur 30 et le codeur 32 peut être ainsi obtenue avec la précision suffisante qui rend inutile tout réglage ultérieur.

Une garniture à lèvres d'étanchéité axiale 39 et radiale 39′ repose sur une monture d'appui 40 emboitée sur la monture 33 support du codeur 32.

Une autre lèvre radiale 41 repose sur la monture 33 et assure la retenue d'une première réserve de graisse A, elle-même isolée d'une deuxième réserve B par la lèvre axiale 39. Les réserves A, B, respectivement situées entre les lèvres 41, 39 et 39, 39′, assurent une double étanchéité et la lubrification de l'ensemble des lèvres 39, 39′, 41.

3       EP 0 371 836 B1       4

## Revendications

1. Roulement à capteur d'informations du type comportant une bague (15) fixe portant un moyen capteur (20) de champ magnétique fixé sur un premier support (17) monté sur la bague fixe et une bague (16) tournante portant un moyen codeur (22) fixé sur un deuxième support (24) monté sur la bague tournante, des chemins de roulement de réception de corps roulants ( 14) au contact desdites bagues (15 - 16) et une garniture (26) à lèvres d'étanchéité (27, 27') et dans lequel le premier support (17) porte une monture (18) d'appui des lèvres d'étanchéité (27, 27') de la garniture, caractérisé par le fait que la monture (18) d'appui est solidaire du moyen capteur (20) et comporte une ouverture axiale (21) placée dans le champ magnétique du moyen codeur (22) fixé sur le support (24) de la garniture (26) d'étanchéité.

2. Roulement à capteur d'informations du type comportant une bague (35) fixe portant un moyen capteur (30) de champ magnétique fixé sur un premier support (37) monté sur la bague fixe et une bague (36) tournante portant un moyen codeur (32) fixé sur un deuxième support (33) monté sur la bague tournante, des chemins de roulement de réception de corps roulants (14) au contact desdites bagues (35 - 36) et une garniture (26) à lèvres d'étanchéité (39, 39') et dans lequel le premier support (37) porte une monture (40) d'appui des lèvres d'étanchéité (39, 39') de la garniture, caractérisé par le fait que la monture (40) d'appui est emboîtée sur le support (33) du moyen codeur (32) et constitue un appui tournant au contact de la garniture.

3. Roulement selon la revendication 1, caractérisé par le fait que le moyen codeur (22) est réalisé dans la matière constitutive de la garniture d'étanchéité (26) localement chargée au niveau dudit élément codeur, par une matière magnétisable.

## Patentansprüche

1. Kugellager mit Meßwertaufnehmer, das einen feststehenden Ring (15) aufweist, der einen Magnetfeldfühler (20) trägt, der an einer ersten Halterung (17) befestigt ist, die am feststehenden Ring angeordnet ist und einen sich drehenden Ring (16) aufweist, der einen Codierer (22) trägt, der an einer zweiten Halterung (24) befestigt ist, die am sich drehenden Ring angeordnet ist, Rollbahnen zur Aufnahme von Rollkörpern (14) aufweist, die in Kontakt mit den Ringen (15, 16) stehen und eine mit Lippen (27, 27') versehene Dichtung (26) aufweist, wobei die erste Halterung (17) eine Stützanordnung (18) für die Lippen (27, 27') der Dichtung aufweist, dadurch gekennzeichnet, daß die Stützanordnung (18) fest mit dem Fühler (20) verbunden ist und eine axiale Öffnung (21) aufweist, die im Magnetfeld des Codierers (22) vorgesehen ist, der an der Halterung (24) der Dichtung (26) befestigt ist.

2. Kugellager mit Meßwertaufnehmer, das einen feststehenden Ring (30) aufweist, der einen Magnetfeldfühler (30) trägt, der an einer ersten Halterung (37) befestigt ist, die am feststehenden Ring angeordnet ist und einen sich drehenden Ring (36) aufweist, der einen Codierer (32) trägt, der an einer zweiten Halterung (33) befestigt ist, die am sich drehenden Ring angeordnet ist, Rollbahnen zur Aufnahme von Rollkörpern (14) aufweist, die in Kontakt mit den Ringen (35, 36) stehen und eine mit Lippen (39, 39') versehene Dichtung (26) aufweist, wobei die erste Halterung (37) eine Stützanordnung (40) für die Lippen (39, 39') der Dichtung aufweist, dadurch gekennzeichnet, daß die Stützanordnung (40) auf die Halterung (33) des Codierers (32) aufgesetzt ist und eine sich drehende Stütze im Kontakt mit der Dichtung bildet.

3. Kugellager nach Anspruch 1, dadurch gekennzeichnet, daß der Codierer (22) aus demjenigen Material besteht, aus dem die Dichtung (26) geformt ist und auf Höhe eines Codierstreifens mit einem magnetisierbaren Stoff versetzt ist.

## Claims

1. An information sensor bearing of the type comprising a fixed ring (15) bearing a magnetic field sensor means (20) fixed on a first support (17) mounted on the fixed ring and a rotary ring (16) bearing an encoder means (22) fixed on a second support (24) mounted on the rotary ring, raceways receiving rolling bodies (14) in contact with these rings (15, 16) and a gasket (26) with sealing lips (27, 27') and in which the first support (17) bears a support mounting (18) for the sealing lips (27, 27') of the gasket, characterized in that the support mounting (18) is rigid with the sensor means (20) and comprises an axial opening (21) disposed in the magnetic field of the encoder means (22) fixed on the support (24) of the sealing gasket (26).

2. An information sensor bearing of the type comprising a fixed ring (35) bearing a magnetic field sensor means (30) fixed on a first support (37) mounted on the fixed ring and a rotary ring (36) bearing an encoder means (32) fixed on a second support (33) mounted on the rotary ring, raceways receiving rolling bodies (14) in contact with these rings (35, 36) and a gasket (26) with sealing lips (39, 39') and in which the first support (37) bears a support mounting (40) for the sealing lips (39, 39') of the gasket, characterized in that the support mounting (40) is fitted on the support (33) of the encoder means (32) and forms a support rotating in contact with the gasket.

3. A bearing as claimed in claim 1, characterized in that the encoder means (22) is made from the material forming the sealing gasket (26) charged locally

3

with a magnetizable material at the location of the encoder means.

# FIG 1

FIG 2

# FIG.3